# EUROPÄISCHE PATENTSCHRIFT

(11) **EP 2 482 643 B1**
(45) Veröffentlichungstag und Bekanntmachung des Hinweises auf die Patenterteilung: **12.11.2014**
(21) Anmeldenummer: 10768069.6
(22) Anmeldetag: 22.09.2010
(51) Int. Cl.: A01K 5/00

(54) **FAHRZEUG FÜR DIE MOBILE MISCHFUTTERAUFBEREITUNG**
VEHICLE FOR MOBILE MIXED FEED PREPARATION
VÉHICULE POUR LA PRÉPARATION MOBILE DE FOURRAGE MÊLANGÉ

(30) Priorität: 28.09.2009 DE 202009011076 U
(43) Veröffentlichungstag der Anmeldung: 08.08.2012
(73) Patentinhaber: TH. Buschhoff GmbH & Co., 59227 Ahlen (DE)
(72) Erfinder: FÖGELING, Willi, 59394 Lüdinghausen (DE); LÜTKE HARMANN, Reinhold, 48324 Sendenhorst (DE)
(74) Vertreter: Althaus, Arndt
(86) Internationale Anmeldenummer: PCT/IB2010/054278
(87) Internationale Veröffentlichungsnummer: WO 2011/036631

(56) Entgegenhaltungen:
- DE-A1- 10 018 752
- DE-A1-102008 019 995
- DE-U1-202004 015 424

## Beschreibung

Die Erfindung betrifft ein Fahrzeug mit Anlagekomponenten zur Verarbeitung landwirtschaftlicher Güter und Kraftfutterbestandteile, insbesondere Fahrzeug für die mobile Tiermischfutteraufbereitung, wobei die auf dem Fahrzeug montierten Anlagekomponenten zumindest eine Zerkleinerungseinrichtung wie eine Mühle und/oder eine Quetsche, einen ersten Mischbehälter mit Mischerschnecke, einen zweiten Mischbehälter mit Mischerschnecke, eine Austragseinrichtung zum Ausbringen einer fertig gemischten Charge aus den Mischbehältern sowie eine zumindest ein Gebläse sowie einen Filter aufweisende Pneumatikfördereinrichtung zum Beschicken der Mischbehälter und/oder zum Transportieren der Güter zwischen den Anlagekomponenten umfassen.

Fahrbare Mahl- und Mischanlagen werden in der Landwirtschaft z.B. bei der Aufbereitung und Mischung vön Viehfütter benötigt. Für viele Landwirte ist es unwirtschaftlich, eigene stationäre Mischanlagen für Viehfutter u.dgl. anzuschaffen. Daher sind diese Landwirte dazu übergegangen, auf ihrem Hof nur Futtersilos od.dgl. aufzustellen, und die Mischung und Aufbereitung des Viehfutters aus vorrangig betriebseigenem Getreide von Unternehmern, die mit ihren auf LKW-Fahrzeugen montierten mobilen Mahl- und Mischanlagen zu den einzelnen Höfen hinfahren, durchführen zu lassen. Auf den hierzu eingesetzten Fahrzeugen müssen sämtliche Komponenten montiert sein, die für das Ansaugen, Zerkleinern, Fördern, Mischen und Austragen der Viehfutterkomponenten benötigt werden. Die fahrbaren Mahl- und Mischanlagen weisen z.B. Pneumatikförderer zum Ansaugen der Mischfutterkomponenten, Quetschen oder Hammermühlen zum Zerkleinern der Komponenten sowie einen ein Mischwerkzeug aufweisenden Mischbehälter auf, dem Mischgut pneumatisch mittels der Pneumatikförderanlage oder eventuell auch mittels einer Förderschnecke zugeführt wird und dem eine Austragseinrichtung zum Austragen des fertig gemischten Mischguts zugeordnet ist. Auch das Austragen erfolgt vorzugsweise pneumatisch, um mittels Schlauchleitungen auch hohe Silos befüllen zu können.

Die Anmelderin selbst vertreibt als mobile Mahl-, Quetsch- und Mischeinrichtung umgerüstete Fahrzeuge mit einem teleskopierbaren Mischbehälter, mit dem das Mischbehältervolumen und damit auch die Mischleistung am Einsatzort variabel ist und um annähernd 50 % gegenüber herkömmlichen Fahrzeugen mit mobiler Mahl- und Mischeinrichtung erhöht werden kann, wobei aufgrund des teleskopartigen Aufbaus des Mischbehälters eine niedrige Gesamtfahrzeughöhe gewährleistet wird und daher nahezu jede Brückendurchfahrt möglich bleibt (DE 199 60 118 C2).

Aus der EP 166 133 B1 ist ein Fahrzeug mit mobiler Mischanlage bekannt, bei welchem zur Erhöhung des Mischbehältervolumens ein liegender, druckfester Mischbehälter mit zwei in Fahrtrichtung hintereinander angeordneten Austragstrichtern und jeweils einer Mischerschnecke je Austragstrichter eingesetzt wird. Die Abwurfbereiche beider Mischerschnecken überschneiden sich, da oberhalb beider Austragstrichter ein offener Verbindungsbereich ausgebildet ist, und jeder Austragstrichter weist zwei Austragsstutzen auf, die über gemeinsame pneumatische Förderleitungen verbunden sind, um das Mischgut je nach Schaltung der Förderleitungen pneumatisch einem oder beiden Austragstrichtern zu entnehmen.

Aus der DE 199 53 163 A1 ist zur Erhöhung der Mischerleistung bekannt, auf einem an eine fahrbare Zugmaschine ankoppelbaren Anhänger zwei nach oben offene Mischbehälter mit Vertikalschnecken anzuordnen, die separat beladen und separat nach Beendigung eines Mischvorgangs entladen werden können. Mittels den Mischbehältern zugeordneter Wiegeeinrichtungen soll eine Überfüllung oder eine Totalentleerung überwacht werden und beide Mischbehälter sind durch eine Querfördereinrichtung verbunden.

Aus der DE 10 2008 019 995 A1 ist ein Fahrzeug mit einem Mischbehälter bekannt, wobei dieser Mischbehälter zwei in Fahrzeuglängsrichtung hintereinander angeordnete Austragstrichter mit je einer sich vom Trichtergrund aus erstreckenden Mischerschnecke hat. Der Mischbehälter weist eine zwischen den beiden Austragstrichtern angeordnete, um eine vertikale Achse verschwenkbare Tür auf, um eine Durchtrittsöffnung im Mischbehälter wahlweise zu schließen, um die beiden Kammer getrennt voneinander betreiben zu können, oder zu öffnen, um eine Durchmischung von Mischgut aus dem einen Behälterabschnitt in den anderen Behälterabschnitt zu überführen oder umgekehrt. Eine Saugleitung zur Beschickung des Mischbehälters steht mit beiden Mischkammern in Strömungsverbindung und über einen Steuerschalter kann das Mischgut wahlweise der einen oder der anderen Mischkammer zugeführt werden. Jede Mischkammer kann einzeln betrieben werden, wenn die Durchtrittsöffnung in der Trennwand geschlossen ist. Hierdurch können unterschiedliche Mischverhältnisse in den beiden Mischkammern des Mischbehälters erreicht werden, wozu diese vorzugsweise abwechselnd betrieben werden.

Aufgabe der vorliegenden Erfindung ist es, ein Fahrzeug bzw. eine mobile, d.h. auf einem Fahrzeug montierte und mit diesem auch über große Strecken verfahrbare Mischanlage für die Tiermischfutteraufbereitung zu schaffen, mit dem hohe Mischleistungen und Austragsleistungen in kurzer Zeit möglich sind.

Diese Aufgabe wird erfindungsgemäß dadurch gelöst, dass zumindest die zwei Mischbehälter aus getrennten Druckbehältern bestehen, die wahlweise zusammen oder getrennt mittels der Pneumatikfördereinrichtung beschickbar sind und wahlweise zusammen oder getrennt über die vorzugsweise pneumatische Austragseinrichtung entleerbar sind. Bei der erfindungsgemäßen Lösung, die zwei Mischbehälter verwendet, die sowohl zusammen als auch getrennt beschickbar und entleerbar sind, wird das bisher bei mobilen, d.h. auf Fahrzeugen montierten Mahl-, Quetsch- und Mischanlagen verwendete Konzept der absätzigen Arbeitsweise dieser mobilen Anlagen verlassen und die Gesamtleistung der mobilen Mischanlage wird bei gleichem Energieeinsatz dadurch gesteigert, dass zeitgleich unterschiedliche Vorgänge wie Beschicken und Mischen eines Mischbehälters und Austragen aus dem anderen Mischbehälter unter Aufrechterhaltung der sonstigen Vorteile der gattungsgemäßen mobilen Mischanlagen stattfinden können. Die Variabilität sowohl beim Beschicken als auch beim Entleeren unter Nutzung der Pneumatikfördereinrichtung trägt maßgeblich zu der Leistungssteigerung der gesamten mobilen Anlage bei.

In der Ansaugleitung für beide Mischbehälter ist eine Aufteileinrichtung eingebaut, mit der die wahlweise getrennte oder gemeinsame Beschickung der Mischbehälter steuerbar ist. Die hohe Variabilität insbesondere beim Beschicken wird mithin mit einer vergleichsweise einfach ansteuerbaren und zugleich in der Betriebsweise sicheren, mechanischen und daher stabilen Einrichtung erreicht. Mittels der Aufteileinrichtung bei gemeinsamer Beschickung beider Mischbehälter ist die Menge an Mischgut, die dem jeweiligen Mischbehälter momentan zugeführt wird, steuerbar. Um die Betriebsweise der Mischanlage auf dem Fahrzeug besonders variabel zu gestalten, ist vorzugsweise jedem Mischbehälter eine separate, vorteilhafterweise elektronische Wiegeeinrichtung zugeordnet. Bei Vorhandensein einer Wiegeeinrichtung je Mischbehälter sowie einer Aufteileinrichtung kann dann in Abhängigkeit von den Messsignalen der Wiegeeinrichtung die Menge an zugeführtem Mischgut gewichtsabhängig, mithin nach dem Füllstand in den Mischbehältern, geregelt werden und es kann beispielsweise dafür gesorgt werden, dass ein gleichmäßiges, gewichtsgesteuertes Befüllen beider Mischbehälter erfolgt. Je nach zu mischenden Mengen kann allerdings die Ansteuerung auch derart erfolgen, dass der Volumenstrom zwischen beiden Mischbehältern ungleichmäßig gequotelt wird, um während des weiteren Betriebseinsatzes den zuerst ggf. vollständig gefüllten und durchmischten Mischbehälter zu entleeren, während der andere Mischbehälter noch mit zu mischenden Futterbestandteilen als Mischgut befüllt wird.

Bei einer besonders vorteilhaften Ausgestaltung ist die Aufteileinrichtung mit einer vorzugsweise stufenlos verschwenkbaren Aufteilklappe versehen, mit der über die gemeinsame Ansaugleitung angesaugtes Mischgut mit einstellbaren Mengenanteilen auf getrennte Zuführleitungen für die Mischbehälter aufteilbar ist. Durch Ändern der Schwenkstellung der Aufteilklappe wird dann mithin der Mengenstrom zwischen z.B. 0% und 50% für den einen Mischbehälter und dem entsprechenden Restanteil für den anderen Mischbehälter aufgeteilt. Die Aufteilklappe kann in einfachster Ausgestaltung als Pendelklappe eingebaut sein, die in einer Mittelstellung für eine gleichmäßige Aufteilung des Mengenstroms auf beide Mischbehälter sorgt. In bevorzugter Ausgestaltung weist das freie Ende der Aufteilklappe in Richtung auf die Ansaugleitung hin. Weiter vorzugsweise ist die Aufteilklappe mit einem Neigungssensor zum Kontrollieren des Schwenkwinkels der Aufteilklappe versehen. Über die Signale des Neigungssensors, einer Steuereinrichtung sowie unter Nutzung der Wiegeeinrichtungen kann, ggf. auch jeweils für die momentan angesaugte Getreideart, eine Nachregulierung der Schwenkstellung der Aufteilklappe erfolgen, um die gewünschte Mengenaufteilung zu regeln. In einfachster Ausgestaltung ist die Aufteilklappe drehfest mit einer Lagerwelle verbunden, die an einem Aufteilergehäuse gelagert ist, welches an einer Stirnseite mit einem Ansauganschluss für die Ansaugleitung und an einer gegenüberliegenden Seite mit wenigstens zwei getrennten Mischbehälteranschlüssen für die Zuführleitungen zu den Mischbehältern versehen ist. Zumindest die Ansaugleitung vor und ggf. auch Zwischenleitungen unmittelbar hinter der Aufteileinrichtung können einen rechteckigen Querschnitte aufweisen. Das Aufteilergehäuse kann vorzugsweise einen rechteckförmigen Innenquerschnitt erhalten, um bei relativ einfachem Aufbau mit einer annähernd rechteckförmigen Aufteilklappe die Mengenanteile, die den jeweiligen Mischbehältern zugeführt werden, zu regulieren. Zum Einstellen der Schwenkstellung der Aufteilerklappe kann die Lagerwelle außerhalb des Aufteilergehäuses mit einem Stellarm verbunden sein, der mittels einer Stelleinrichtung, insbesondere einem elektrischen, hydraulischen oder pneumatischen Stellzylinder, bewegbar ist. Über den vorzugsweise hydraulischen Stellzylinder kann mithin ein kontrolliertes Verschwenken der Aufteilklappe auf relativ einfache Weise bewirkt werden, wobei zugleich über den Stellarm und ggf. einen Stellhebel eine Selbstarretierung der Lagerwelle in der jeweils eingestellten Schwenkstellung erreicht werden kann.

Weiter vorzugsweise kann in jeder Zuführleitung zu den Mischbehältern hinter der Aufteileinrichtung ein Drosselorgan, insbesondere ein mittels eines Pneumatikzylinders ansteuerbarer Kugelhahn eingebaut sein, um zumindest dann, wenn eine Entleerung eines zuvor pneumatisch über die Pneumatikförderanlage mit Unterdruck gefüllten Mischbehälters erfolgen soll, diesen pneumatisch vollständig von der mit Unterdruck beaufschlagten Ansaugleitung und Aufteileinrichtung abzukoppeln. Ein Betrieb der mobilen Mischanlage auf dem Fahrzeug ist grundsätzlich mit einem einzigen Gebläse möglich. Insbesondere vorteilhaft ist allerdings, wenn auf dem Fahrzeug zwei Gebläse, insbesondere Drehkolbengebläse oder Schraubenverdichter, mit Saug- und Druckseite für die Pneumatikförderanlage vorgesehen sind. Durch das Vorhandensein von zwei Gebläsen kann nicht nur für das pneumatische Ausbringen bzw. Ausblasen des Mischguts in relativ hohe Silos eine maximale Leistung zur Verfügung gestellt werden, sondern es kann zugleich auf relativ einfache Weise simultan mit einem Gebläse eine maximale Saugleistung und mit einem anderen Gebläse eine maximale Blasleistung erreicht werden. Über geeignete Ventile kann jedoch auch mit einem Gebläse höherer Leistung das Ansaugen über dessen Saugseite und das Ausblasen über dessen Druckseite erfolgen. Bei der Verwendung von zwei Gebläsen ist besonders vorteilhaft, wenn die Saugseite beider Gebläse zur Unterdruckbeaufschlagung der Mischbehälter über eine Unterdruckleitung an die Mischbehälter angeschlossen ist, wobei der Saugseite beider Gebläse jeweils getrennte Saugventile zum Trennen des zugehörigen Gebläses von der Unterdruckleitung zugeordnet sind. Alternativ oder zusätzlich kann der Druckseite des ersten Gebläses eine erste Luftverteileinrichtung und der Druckseite des zweiten Gebläses eine zweite Luftverteileinrichtung zugeordnet sein, die über eine ansteuerbare Verbindungsklappe wie z.B. einen Ausblaskanalschieber wahlweise verbindbar oder trennbar sind. Gemäß einer insbesondere bevorzugten Ausgestaltung ist die erste Luftverteileinrichtung mit einem Oberluftanschluss und einem Unterluftanschluss zur Überdruckbeaufschlagung und Druckentleerung des ersten Mischbehälters und die zweite Luftverteileinrichtung mit einem Oberluftanschluss und einem Unterluftanschluss zur Überdruckbeaufschlagung und Druckentleerung des zweiten Mischbehälters versehen, wobei gleichzeitig über Verzweigungsleitungen sichergestellt sein sollte, dass jedenfalls für die Druckentleerung das Material aus beiden Mischbehältern wahlweise über einen Druckluftstrom des ersten und/oder des zweiten Gebläses ausgetragen werden kann.

Die Variabilität der erfindungsgemäßen mobilen Mischanlage wird zusätzlich gesteuert, wenn in einer Gutzuführleitung der Pneumatikförderanlage eine Weiche mit verstellbarer Weichenklappe eingebaut ist, mit der der Gutstrom wahlweise der Mühle und/oder Quetsche oder direkt der Aufteileinrichtung zuführbar ist. Mit der Weiche und der Weichenklappe können dann bestimmte Futterkomponenten, die zuvor in stationären Anlagen zerkleinert wurden und/oder in exakten Dosierungen den einzelnen Mischbehältern zugeführt werden sollen, auf kurzem Wege in die einzelnen Mischbehälter eingebracht werden. Das Fahrzeug mit der mobilen Mahl- und Mischanlage muss nicht unbedingt eine Mühle und eine Quetsche aufweisen, da bei Tierfutter für bestimmte Tierarten ggf. ausreichend sein kann, z.B. nur eine Mühle vorzusehen oder ggf. sogar auf eine Zerkleinerungseinrichtung zu verzichten. Zur Komfortsteigerung der gesamten mobilen Mahl- und Mischanlage sind vorzugsweise die Anlagekomponenten mittels einer zentralen Bedienungseinrichtung ansteuerbar, wobei mit der zentralen Bedieneinrichtung zugleich auch wahlweise eine getrennte oder gemeinsame Beschickung der Mischbehälter und/oder auch eine getrennte oder gemeinsame Entleerung der Mischbehälter auswählbar ist. Die zentrale Bedieneinrichtung kann derart ausgeführt sein, dass an der Bedieneinrichtung ein gewichtsabhängiges Beschicken oder Entleeren der Mischbehälter zuschaltbar ist. Die Bedieneinrichtung kann hierzu entweder Wahlschalter oder z.B. einen Touchscreen-Bildschirm aufweisen, an dem die jeweilige Betriebsart auswählbar ist.

Weitere Vorteile und Ausgestaltungen einer erfindungsgemäßen mobilen Mahl- und Mischanlage bzw. eines Fahrzeugs hiermit ergeben sich aus der nachfolgenden Be-schreibung eines schematisch in der Zeichnung gezeigten Ausführungsbeispiels. In der Zeichnung zeigen:
**Fig. 1** in einem Blockschaltbild den Aufbau der auf einem Fahrzeug montierten Mahl- und Mischanlage mit zwei getrennten Druckbehältern als Mischbehälter;
**Fig. 2** eine vor den Mischbehältern gemäß einer bevorzugten erfindungsgemäßen Ausgestaltung eingebaute Aufteileinrichtung mit Aufteilklappe, Ansaugleitung und Mischbehälter-Zuführleitungen in Seitenansicht;
**Fig. 3** die Aufteileinrichtung aus Fig. 2 in Vorderansicht; und
**Fig. 4** schematisch eine bei der Mischanlage einsetzbare Weiche in Seitenansicht.

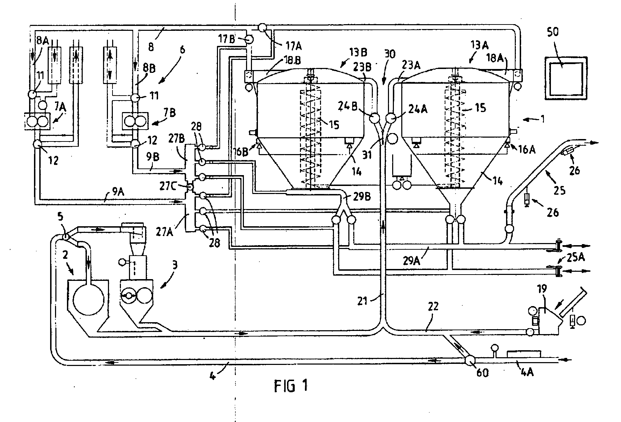

Im Blockschaltbild gemäß Fig. 1 sind die wesentlichen, normalerweise fest auf einem nicht weiter gezeigten Fahrzeug montierten Anlagekomponenten eines mobilen Kraftfutterwerkes bzw. einer mobilen Mahl- und Mischanlage zur Tiermischfutteraufbereitung dargestellt. Die insgesamt mit Bezugszeichen 1 bezeichnete mobile Zerkleinerungs- und Mischanlage kann beispielsweise für die Mischfutteraufbereitung für Schweine, Wiederkäuer oder Geflügel aus betriebseigenem Getreide des Tierhaltebetriebes mit betriebseigenen oder zugekauften Komponenten eingesetzt werden, wobei Mischfutter verschiedenster Strukturen und Feinheiten mit der mobilen Zerkleinerungs- und Mischanlage 1 hergestellt werden können. Im Blockschaltbild gemäß Fig. 1 bezeichnet Bezugszeichen 2 eine Hammermühle und Bezugszeichen 3 eine Quetsche, denen zu quetschendes oder zu mahlendes Getreide, aber auch Erbsen, Bohnen u.dgl. über eine gemeinsame Mischgutförderleitung 4 zugeführt werden kann, wobei mittels einer schematisch angedeuteten Saugklappe 5 eingestellt werden kann, ob das zu zerkleinernde Gut der Quetsche 3 oder der Mühle 2 zugeführt wird. Es versteht sich, dass die Mühle 2 oder die Quetsche 3 auch entfallen könnten. Das Ansaugen der zu zerkleinernden Güter und auch der Weitertransport der mit Mühle 2 oder Quetsche 3 zerkleinerten Güter erfolgt mittels einer hier insgesamt mit Bezugszeichen 6 bezeichneten Pneumatikförderanlage, die im gezeigten Ausführungsbeispiel ein erstes Drehkolbengebläse 7A und ein zweites Drehkolbengebläse 7B aufweist. Über die Pfeile innerhalb der Leitungen sind jeweils für das Pneumatikfördersystem die Transportrichtung bzw. für die Pneumatikförderanlage 6 die Saugseite der Drehkolbengebläse 7A, 7B mit den Unterdruckrohren 8A, 8B und die Druckseite mit den Ausblasrohren 9A, 9B dargestellt. Mittels Ventilen 11 und 12 kann jeweils auf der Saugseite oder der Druckseite der Drehkolbengebläse 7A, 7B reguliert werden, ob der Überdruck- oder Unterdruckluftstrom den einzelnen Anlagekomponenten zugeschaltet wird oder nicht.

Ein wesentliches Element der erfindungsgemäßen mobilen Zerkleinerungs- und Mischanlage bilden hier die auf dem Fahrzeug vorzugsweise in Fahrtrichtung hintereinander montierten zwei Mischbehälter, nämlich ein erster Mischbehälter 13A und ein zweiter Mischbehälter 13B, die beide bodenseitig einen Auslauftrichter 14 und mittig im Mischbehälterinnenraum eine stehend angeordnete, rotierbare Mischerschnecke 15 aufweisen. Beide Mischbehälter 13A, 13B sind, damit der Materialtransport mittels der Pneumatikförderanlage 6 stattfinden kann, als Druckbehälter ausgeführt. Dem ersten Mischbehälter 13A ist eine erste Wiegeeinrichtung 16A und dem zweiten Mischbehälter 13B ist eine zweite Wiegeeinrichtung 16B zugeordnet, deren Messsignale permanent an einen Vergleichsrechner einer schematisch über einen Bildschirm angedeuteten Bedieneinrichtung 50 zugeführt werden können. Das Ansaugen von zu mischendem Gut in die beiden Mischbehälter 13A, 13B erfolgt über die Unterdruckrohre 8A, 8B nebst Unterdruckleitungsstrang 8, Unterdruckklappen 17A, 17B sowie Filter 18A, 18B, die jeweils am oberen Ende der Mischbehälter 13A, 13B angeschlossen sind und ggf. mit einem Abscheider o.dgl. versehen sind. Mittels eines oder mittels beider Drehkolbengebläse 7A, 7B können über die Unterdruckleitungen 8, 8A, 8B die Innenräume eines oder beider Mischbehälter 13A, 13B unter Unterdruck gesetzt werden, um Material in die Mischbehälter 13A, 13B hineinzusaugen. In der Mischgutförderleitung 4 ist hierbei hinter einer Einfüllleitung 4A eine Weiche 20 eingebaut, mit der zugeführtes Rohgetreide oder Rohgut wahlweise den Zerkleinerungseinrichtungen, d.h. Mühle 2 und Quetsche 3, oder unmittelbar einer gemeinsamen Ansaugleitung 21 für die beiden Mischbehälter 13A, 13B zugeführt werden kann. Der Aufbau der Weiche 60 am Ende der Einfüllleitung 4A wird weiter unten noch beschrieben werden. Optional können unmittelbar in die Ansaugleitung 21 auch Zusatzkomponenten für das Kraftfutter hineingesaugt werden, die über einen Komponententrichter 19 und eine Komponentenleitung 22 eingebracht werden.

In der gemeinsamen Ansaugleitung 21 für die beiden Mischbehälter 13A, 13B ist eine insgesamt mit Bezugszeichen 30 bezeichnete Aufteileinrichtung angeordnet, die vorzugsweise eine Pendelklappe als Aufteilklappe 31 bzw. Aufteilorgan aufweist. Die Schwenkstellung der Aufteilklappe 31 kann verstellt und vorzugsweise geregelt werden, um vorrangig ausschließlich mittels der Aufteileinrichtung 30 zu steuern, ob das über die Ansaugleitung 21 angesaugte Mischgut nur dem ersten Mischbehälter 13A, nur dem zweiten Mischbehälter 13B oder aber beiden Mischbehältern 13A, 13B zugeführt wird. Über den Bedienrechner in der Bedieneinrichtung 50 kann aufgrund der von den beiden Wiegeeinrichtungen 16A, 16B momentan gelieferten Messsignale für das Füllgewicht der Mischbehälter 13A, 13B die Stellung der Aufteilklappe 31 gewichtsabhängig geregelt werden, um in beiden Mischbehältern 13A, 13B permanent ein annähernd gleiches Füllgewicht während des Beschickvorgangs einzustellen. Über die Aufteileinrichtung 30 kann allerdings auch gesteuert werden, dass eine erste Mischcharge ausschließlich dem ersten Mischbehälter 13A, und eine zweite Mischcharge, die z.B. auch aus unterschiedlichen Mischgutkomponenten zusammengesetzt ist, ausschließlich dem zweiten Mischbehälter 13B zugeführt wird. Um Fehlluftströme zu vermeiden, ist in den hinter der Aufteileinrichtung 30 angeschlossenen Zuführleitungen 23A zum ersten Mischbehälter und 23B zum zwischen Mischbehälter jeweils ein ansteuerbares Drossel- oder Absperrorgan 24A bzw. 24B angeordnet, dessen Aufbau, wie auch der Aufbau der Aufteileinrichtung 30, weiter unten noch erläutert werden wird.

Nachdem Tiermischfutter zumindest in einem der beiden Mischbehälter 13A oder 13B fertig gemischt wurde, kann der Austrag der fertig gemischten Charge in eine bzw. mit einer Austragseinrichtung erfolgen, die beispielsweise aus einem schwenkund knickbaren Ausblasrohr 25 bestehen kann, das mittels auf dem Fahrzeug integrierter oder separater Hubeinrichtungen 26 auch auf Silodachhöhe angehoben werden kann. Bei Nutzung eines Blasschlauches 25 erfolgt die gesamte Austragung über die Druckseite der Drehkolbengebläse 7A und/oder 7B, wobei der Druckluftstrom des ersten Drehkolbengebläses 7A im gezeigten Ausführungsbeispiel einem ersten Luftverteiler 27A und der Druckluftstrom des zweiten Drehkolbengebläses 7B einem zweiten Luftverteiler 27B zugeführt wird, welche beide mit mehreren Abgangsleitungen versehen sind, die jeweils mittels Druckventilen 28 absperrbar sind. Die beiden Luftverteiler 27A, 27B können durch Öffnen eines Schiebers 27C verbunden werden. Eine der Abgangsleitungen der erste Luftverteileinrichtung 27A bildet einen Oberluftanschluss und eine weitere einen Unterluftanschluss zur Überdruckbeaufschlagung und Druckentleerung des ersten Mischbehälters 13A und gleichermaßen bilden Abgangsleitungen an der zweiten Luftverteileinrichtung 27B einen Oberluftanschluss und einen Unterluftanschluss zur Überdruckbeaufschlagung und Druckentleerung des zweiten Mischbehälters 13B. Eine weitere Abgangsleitungen des zweiten Luftverteilers 27B führt unterhalb des Trichters 14 des zweiten Mischbehälters 13B in eine Ausblasleitung 29B und eine Abgangsleitung des ersten Luftverteilers 27A führt entsprechend in eine Ausblasleitung 29A unterhalb des ersten Mischbehälters 13A, wobei über weitere Verzweigungen innerhalb der Ausblasleitung 29B, oder über unterschiedliche Auslassklappen an den Trichtern 14, wie beim ersten Mischbehälter 13A angedeutet, erreicht werden kann, dass das fertig gemischte Tiermischfutter dem Ausblasrohr 25 oder einem separaten Austragsanschluss 25A zugeführt wird. Am Austragsanschluss kann das fertig gemischte Tierfutter auch z.B. an eine Schneckenfördereinrichtung o.dgl. übergeben werden kann.

Aufgrund der in der Zuführleitung 21 angeordneten Aufteileinrichtung 30 kann bei vorhandenen zwei druckfesten Mischbehältern 13A, 13B äußerst variabel bei der Tiermischfutteraufbereitung gearbeitet werden, da z.B. noch während des Mischvorgangs in einem der beiden Mischbehälter 13A oder 13B fertig gemischtes Tiermischfutter aus dem anderen Mischbehälter bereits ausgetragen werden kann. Da auch die Mengenströme eingestellt werden können, kann mit verschiedensten Konzepten eine Optimierung des Mischvorgangs einschließlich des Füllens des Mischguts in einen Silo o.dgl. stattfinden.

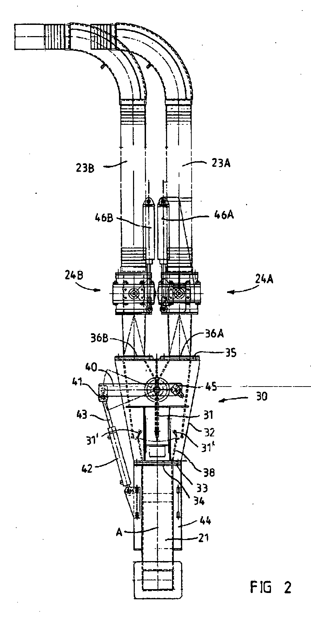

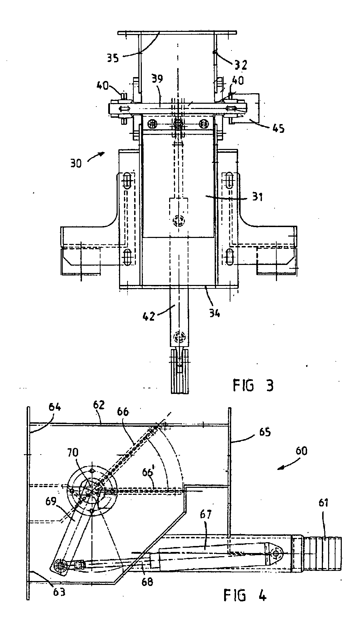

Die Fig. 2 zeigt aus dem gesamten Leitungssystem der Pneumatikförderanlage den Abschnitt zwischen der Ansaugleitung 21 und den getrennten Zuführleitungen 23A, 23B zu den Mischbehältern. In diesem Leitungsabschnitt ist eine Aufteileinrichtung 30 eingebaut und ferner ist jeder Zuführleitung 23A, 23B ein Kugelhahn als Absperrorgan 24A, 24B zugeordnet. Die Ansaugleitung 21 hat im gezeigten Ausführungsbeispiel einen rechteckförmigen Querschnitt und die Aufteileinrichtung 30 ist an einem im wesentlichen vertikal verlaufenden Leitungsstrang der Ansaugleitung 21 angeschlossen. Die Aufteileinrichtung 30 weist ein Aufteilergehäuse 32 auf, das sich trichterartig zum oberen Ende hin erweitert und an der unteren Stirnseite 33 mit einem Ansauganschluss 34 bzw. hier Ansaugstutzen für die Ansaugleitung 21 versehen ist und an der gegenüberliegenden, hier oberen Seite 35 mit zwei getrennten Abgängen 36A, 36B für die getrennten Mischbehälteranschlüsse versehen ist. Die Zuführleitungen 23A, 23B bestehen wieder aus runden Schläuchen und die Querschnittsänderung von rechteckig im Aufteilergehäuse 32 auf rund erfolgt vorzugsweise in Übergangsstücken vor den Absperrorganen 24A, 24B. Mittig der Achse A der Zuführleitung 21 ist im Aufteilergehäuse 32 oberhalb eines Zuführtrichters 38 eine rechteckförmige Aufteilklappe 31 angeordnet, die in Fig. 2 in mittlerer Schwenk- oder Neigungsstellung gezeigt ist und die hier in beide Richtungen um etwa 25° in Endstellungen verschwenkt werden kann, die in Fig. 2 jeweils mit der Vorderkante 31' angedeutet sind. Die Betätigung der Aufteilerklappe 31 erfolgt, wie auch Fig. 3 zeigt, über eine Lagerwelle 39, an der die Aufteilklappe 31 drehfest und nach unten vorkragend angeschlossen ist und die beidseitig aus dem Aufteilergehäuse 32 seitlich hinausragt. An beiden vorkragenden Wellenenden der Lagerwelle 39 sind hier Stellarmschenkel eines insgesamt mit Bezugszeichen 40 bezeichneten Stellarms angeschlossen, die über eine Brücke 41 außerhalb des Verteilergehäuses 32 miteinander verbunden sind. An dieser Brücke 41 greift ein Stellzylinder 42 mit seinem Stellkolben 43 an, um die Schwenkstellung der Aufteilklappe 31 zu verstellen. Das untere Ende des Stellzylinders 42, der vorzugsweise von einem Hydraulikzylinder gebildet wird, ist an einem Haltekasten 44 angeschlossen, der die Ansaugleitung 21 umgibt. Die momentan aktuelle Neigung der Aufteilklappe 31 wird mittels eines Neigungssensors 45 erfasst, der hier an einem der beiden Schenkel des Verteilarms 40 angeschlossen ist und dessen Signale an die Recheneinheit in der Bedienzentrale (50, Fig. 1) übermittelt werden. Die Aufteilklappe 31 kann im Prinzip jede beliebige Zwischenstellung zwischen den beiden Endstellungen 31' einnehmen, um einen Mischgutstrom in beliebigen Mengenanteilen zwischen den beiden Mischbehälter bzw. den beiden Zuführleitungen 23A, 23B zu den Mischbehältern aufzuteilen.

Auch die beiden vorzugsweise aus Kugelhähnen bestehenden Absperr- bzw. Drosselorgane 24A, 24B sind mittels Stellzylinder 46A, 46B betätigbar, mit denen ein Schaltküken wie insbesondere eine Kugel innerhalb der Kugelhähne verdreht werden kann. Ein vollständiges Schließen eines der beiden Drosselorgane 24A, 24B erfolgt insbesondere dann, wenn der diesem Drosselorgan zugeordnete Mischbehälter bereits entleert werden soll, während in den anderen Mischbehälter noch mit Unterdruck aus der Pneumatikförderanlage Mischgut eingefüllt wird.

Durch die vorgesehenen beiden Mischbehälter 13A, 13B nebst den Zusatzeinrichtungen wie insbesondere der Aufteileinrichtung 30, aber auch der Anordnung von zwei Drehkolbengebläsen 7A, 7B ist es beispielsweise möglich, eines der beiden Drehkolbengebläse für das Ansaugen und das andere Drehkolbengebläse für das Ausblasen zu benutzen, um für beide Betriebsarten eine optimale Blasleistung zur Verfügung zu stellen. Durch die Wiegeeinrichtung ist es möglich, nicht nur das Beschicken der beiden Mischbehälter, sondern auch das Austragen bzw. Ausblasen fertig gemischten Mischgutes gewichtsabhängig zu steuern.

Fig. 4 zeigt schematisch die Weiche 60, mit der eingestellt werden kann, ob angesaugtes Mischgut der zur Mühle und Quetsche führenden Gutförderleitung 4 oder unmittelbar in die Ansaugleitung 21 hineingesaugt wird, wie im Blockschaltbild nach Fig. 1 gezeigt. An einem am Weichengehäuse 62 ausgebildeten Schlauchstutzen 61 wird ein Zuführschlauch angeschlossen, mit dem Material aus dem Komponententrichter unmittelbar einer Komponentenzuführleitung (22, Fig. 1) zugeführt wird. Die Komponentenzuführleitung wird am Weichengehäuse 62 an dem mit Bezugszeichen 63 bezeichneten Leitungsanschluss angeschlossen. Achsparallel zum Leitungsanschluss 63 ist ein zweiter ausgangsseitiger Kanalanschluss 64 vorgesehen, an welchem die Gutförderleitung (4, Fig. 1) angeschlossen wird, während an der gegenüberliegenden Seite des Weichengehäuses 62, hier parallel zum Schlauchanschluss 61, ein weiterer Leitungsanschluss 65 ausgebildet ist, an dem die Einfüllleitung (4A, Fig. 1) angeschlossen werden kann. Innerhalb des Weichengehäuses 62 ist eine Weichenklappe 66 bzw. 66' angeordnet, die, wie gestrichelt gezeigt, zwischen den beiden Endstellungen hin- und hergeschwenkt werden kann. Bei achsparalleler Ausrichtung der Weichenklappe 66' wird Material über den Anschluss 65 dem ausgangsseitigen Anschluss 64 zugeführt. Falls die Weichenklappe 66 allerdings in der anderen Schwenkstellung steht, wird das über den Anschluss 65 angesaugte Material dem anderen Auslassanschluss 63 zugeführt, also dem Anschluss für die Komponentenzuführleitung, so dass dann Mischgut unmittelbar der Aufteileinrichtung zugeführt wird. Die Verstellung der Weichenklappe 66 erfolgt wiederum mittels eines vorzugsweise von einem Pneumatikzylinder gebildeten Stellzylinders 67, dessen Kolbenstange 68 mit einem Schwenkarm 69 verbunden ist, der drehfest an einer Schwenkwelle 70 angreift, mit der die Weichenklappe 66 drehfest verbunden ist. Auch die Weichenklappe 66 kann über annähernd 45° verschwenkt werden, wobei hier in der Regel Zwischenstellungen nicht gewünscht sind und die Weichenklappe entweder die eine oder die andere Schwenkstellung im Arbeitseinsatz einnimmt.

Für den Fachmann ergeben sich aus der vorhergehenden Beschreibung zahlreiche Modifikationen, die in den Schutzbereich der anhängenden Ansprüche fallen sollen. Die beiden Mischbehälter haben vorzugsweise dieselbe Größe, können aber auch unterschiedliche Größen aufweisen. Im gesamten Kreislauf können auch Schnecken als Förderorgane oder zumindest Zwischenförderorgane zum Einsatz kommen. Die Anlage kann als reine mobile Mischanlage betrieben werden und auf nahezu jedem geeigneten Fahrzeug montiert werden.

## Patentansprüche

1. Fahrzeug mit Anlagekomponenten zur Verarbeitung landwirtschaftlicher Güter und Kraftfutterbestandteile, insbesondere Fahrzeug für die mobile Tiermischfutteraufbereitung, wobei die auf dem Fahrzeug montierten Anlagekomponenten zumindest eine Mühle (2) und/oder eine Quetsche (3), einen ersten Mischbehälter (13A) mit Mischerschnecke (15), einen zweiten Mischbehälter (13B) mit Mischerschnecke (15), eine Austragseinrichtung zum Ausbringen einer fertig gemischten Charge aus den Mischbehältern (13A, 13B) sowie eine zumindest ein Gebläse (7A; 7B) sowie einen Filter (18A; 18B) aufweisende Pneumatikfördereinrichtung zum Beschicken der Mischbehälter (13A, 13B) und/oder zum Transportieren der Güter zwischen den Anlägekomponenten umfassen, **dadurch gekennzeichnet, dass** zumindest die zwei Mischbehälter (13A, 13B) aus getrennten Druckbehältern bestehen, die wahlweise zusammen oder getrennt mittels der Pneumatikfördereinrichtung (6) beschickbar sind und wahlweise zusammen oder getrennt über die Austragseinrichtung entleerbar sind, wobei in einer Ansaugleitung (21) für beide Mischbehälter (13A, 13B) eine Aufteileinrichtung (30) eingebaut ist, mit der die wahlweise getrennte oder gemeinsame Beschickung der Mischbehälter (13A, 13B) steuerbar ist, wobei mittels der Aufteileinrichtung (30) bei gemeinsamer Beschickung beider Mischbehälter (13A, 13B) die Menge an dem jeweiligen Mischbehälter zugeführtem Mischgut steuerbar ist.

2. Fahrzeug nach Anspruch 1, **dadurch gekennzeichnet, dass** jedem Mischbehälter (13A, 13B) eine separate, vorzugsweise elektronische Wiegeeinrichtung (16A, 16B) zugeordnet ist.

3. Fahrzeug nach Anspruch 2, **dadurch gekennzeichnet, dass** mit der Aufteileinrichtung (30) in Abhängigkeit von den Messsignalen der Wiegeeinrichtungen (16A, 16B) die Menge an zugeführtem Mischgut regelbar ist.

4. Fahrzeug nach einem der Ansprüche 1 bis 3, **dadurch gekennzeichnet, dass** die Aufteileinrichtung (30) mit einer verschwenkbaren Aufteilklappe (31) versehen ist, mit der über die gemeinsame Ansaugleitung (21) angesaugtes Mischgut mit einstellbaren Mengenanteilen auf getrennte Zuführleitungen (23A, 23B) für die Mischbehälter (13A, 13B) aufteilbar ist.

5. Fahrzeug nach Anspruch 4, **dadurch gekennzeichnet, dass** die Aufteilklappe (31) stufenlos verschwenkbar ist.

6. Fahrzeug nach Anspruch 4 oder 5, **dadurch gekennzeichnet, dass** die Aufteilklappe (31) mit einem Neigungssensor (45) zum Kontrollieren des Schwenkwinkels der Aufteilklappe (31) gekoppelt ist.

7. Fahrzeug nach Anspruch 4, 5 oder 6, **dadurch gekennzeichnet, dass** die Aufteilklappe (31) drehfest mit einer Lagerwelle (39) verbunden ist, die an einem Aufteilergehäuse (32) gelagert ist, das vorzugsweise an einer Stirnseite (33) mit einem Ansauganschluss (34) und an einer gegenüberliegenden Seite mit getrennten Abgängen (36A, 36B) für jeden Mischbehälter (13A, 13B) versehen ist.

8. Fahrzeug nach Anspruch 7, **dadurch gekennzeichnet, dass** die Lagerwelle (39) außerhalb des Aufteilergehäuses (32) mit einem Stellarm (40) verbunden ist, der mittels einer Stelleinrichtung, insbesondere einem hydraulischen Stellzylinder (42) zum kontrollierten Verschwenken der Aufteilklappe (31) bewegbar ist.

9. Fahrzeug nach einem der Ansprüche 1 bis 8, **dadurch gekennzeichnet, dass** in jeder Zuführleitung (23A, 23B) zu den Mischbehältern (13A, 13B) hinter der Aufteileinrichtung (30) ein Drosselorgan, insbesondere ein mittels eines Pneumatikzylinders ansteuerbarer Kugelhahn (24A, 24B) eingebaut ist.

10. Fahrzeug nach einem der Ansprüche 1 bis 9, **dadurch gekennzeichnet, dass** die Pneumatikförderanlage (6) auf dem Fahrzeug zwei Gebläse (7A, 7B), vorzugsweise Drehkolbengebläse, mit Saug- und Druckseite aufweist.

11. Fahrzeug nach Anspruch 10, **dadurch gekennzeichnet, dass** die Saugseite beider Gebläse (7A, 7B) zur Unterdruckbeaufschlagung der Mischbehälter über eine Unterdruckleitung (8a, 8B, 8) an die Mischbehälter (13A, 13B) angeschlossen ist, wobei der Saugseite beider Gebläse jeweils getrennte Saugventile (17A, 17B) zum Trennen des zugehörigen Gebläses von der Unterdruckleitung (8) zugeordnet sind.

12. Fahrzeug nach Anspruch 10 oder 11, **dadurch gekennzeichnet, dass** der Druckseite des ersten Gebläses (7A) eine erste Luftverteileinrichtung (27A) und der Druckseite des zweiten Gebläses (7B) eine zweite Luftverteileinrichtung (27B) zugeordnet ist, die über eine ansteuerbare Verbindungsklappe oder einen Schieber (27C) wahlweise verbindbar oder trennbar sind.

13. Fahrzeug nach Anspruch 12, **dadurch gekennzeichnet, dass** die erste Luftverteileinrichtung (27A) mit einem Oberluftanschluss und einem Unterluftanschluss zur Überdruckbeaufschlagung und Druckentleerung des ersten Mischbehälters (13A) und die zweite Luftverteileinrichtung (27B) mit einem Oberluftanschluss und einem Unterluftanschluss zur Überdruckbeaufschlagung und Druckentleerung des zweiten Mischbehälter (13B) versehen ist.

14. Fahrzeug nach einem der Ansprüche 1 bis 13, **dadurch gekennzeichnet, dass** in einer Gutzuführleitung (4) der Pneumatikförderanlage eine Weiche (60) mit verstellbarer Weichenklappe (66) eingebaut ist, mit der der Gutstrom wahlweise der Mühle und/oder Quetsche oder direkt der Aufteileinrichtung (30) zuführbar ist.

15. Fahrzeug nach einem der Ansprüche 1 bis 14, **dadurch gekennzeichnet, dass** mittels einer zentralen Bedieneinrichtung (50) die Anlagekomponenten ansteuerbar sind und wahlweise eine getrennte oder gemeinsame Beschickung der Mischbehälter und/oder wahlweise eine getrennte oder gemeinsame Entleerung der Mischbehälter auswählbar ist, wobei vorzugsweise an der Bedieneinrichtung ein gewichtsabhängiges Beschicken oder Entleeren der Mischbehälter zuschaltbar ist.

## Claims

1. Vehicle with system components for processing agricultural products and concentrated feed constituents, in particular vehicle for mobile mixed animal feed preparation, wherein the system components mounted on the vehicle comprise at least one grinder (2) and/or crusher (3), a first mixing container (13A) with a mixer worm (15), a second mixing container (13B) with a mixer worm (15), a discharging device for outputting a ready mixed batch from the mixing containers (13A, 13B) and a pneumatic conveying device which has at least one fan (7A; 7B) and a filter (18A; 18B) and is intended for loading the mixing containers (13A, 13B) and/or for transporting the products between the system components, **characterized in that** at least the two mixing containers (13A, 13B) consist of separate pressure containers which are loadable either together or separately by means of the pneumatic conveying device (6) and are emptiable either together or separately via the discharging device, wherein a suction line (21) for the two mixing containers (13A, 13B) contains a dividing device (30) with which the either separate or joint loading of the mixing containers (13A, 13B) can be controlled, wherein, in the event of joint loading of the two mixing containers (13A, 13B), the amount of mixing product supplied to the respective mixing container is controllable by means of the dividing device (30).

2. Vehicle according to Claim 1, **characterized in that** each mixing container (13A, 13B) is assigned a separate, preferably electronic weighing device (16A, 16B).

3. Vehicle according to Claim 2, **characterized in that** the amount of supplied mixing product is regulable by the dividing device (30) as a function of the measuring signals of the weighing devices (16A, 16B).

4. Vehicle according to one of Claims 1 to 3, **characterized in that** the dividing device (30) is provided with a pivotable dividing flap (31) by which mixing product sucked up via the common suction line (21) is dividable with adjustable amount proportions between separate supply lines (23A, 23B) for the mixing containers (13A, 13B).

5. Vehicle according to Claim 4, **characterized in that** the dividing flap (31) is infinitely variably pivotable.

6. Vehicle according to Claim 4 or 5, **characterized in that** the dividing flap (31) is coupled to an inclination sensor (45) for monitoring the pivoting angle of the dividing flap (31).

7. Vehicle according to Claim 4, 5, or 6, **characterized in that** the dividing flap (31) is connected to a bearing shaft (39) for rotation therewith, said bearing shaft being mounted on a divider housing (32) which is provided, preferably on one end side (33), with a suction connection (34) and, on an opposite side, with separate outputs (36A, 36B) for each mixing container (13A, 13B).

8. Vehicle according to Claim 7, **characterized in that** the bearing shaft (39) is connected outside the divider housing (32) to an adjustment arm (40) which is moveable by means of an adjustment device, in particular a hydraulic adjustment cylinder (42), for the controlled pivoting of the dividing flap (31).

9. Vehicle according to one of Claims 1 to 8, **characterized in that** a throttle member, in particular a ball valve (24A, 24B) which is activatable by means of a pneumatic cylinder, is installed behind the dividing device (30) in each supply line (23A, 23B) to the mixing containers (13A, 13B).

10. Vehicle according to one of Claims 1 to 9, **characterized in that** the pneumatic conveying system (6) on the vehicle has two fans (7A, 7B), preferably rotary piston fans, with a suction side and a delivery side.

11. Vehicle according to Claim 10, **characterized in that** the suction side of the two fans (7A, 7B) is connected to the mixing containers (13A, 13B) via a negative pressure line (8A, 8B, 8) for charging the mixing containers with negative pressure, wherein the suction side of the two fans is in each case assigned separate suction valves (17A, 17B) for separating the associated fan from the negative pressure line (8).

12. Vehicle according to Claim 10 or 11, **characterized in that** the delivery side of the first fan (7A) is assigned a first air-distributing device (27A) and the delivery side of the second fan (7B) is assigned a second air-distributing device (27B), which air-distributing devices are either connectable or separable via an activatable connecting flap or a slide (27C).

13. Vehicle according to Claim 12, **characterized in that** the first air-distributing device (27A) is provided with an upper air connection and a lower air connection for charging the first mixing container (13A) with positive pressure and for emptying same of pressure, and the second air-distributing device (27B) is provided with an upper air connection and a lower air connection for charging the second mixing container (13B) with positive pressure and emptying same of pressure.

14. Vehicle according to one of Claims 1 to 13, **characterized in that** a distributing guide (60) with an adjustable distributing-guide flap (66), with which the product flow is supplyable either to the grinder and/or the crusher or directly to the distributing device (30), is installed in a product supply line (4) of the pneumatic conveying system.

15. Vehicle according to one of Claims 1 to 14, **characterized in that** the system components are activatable by means of a central operating device (50) and either a separate or joint loading of the mixing containers and/or either a separate or joint emptying of the mixing containers is selectable, wherein a weight-dependent loading or emptying of the mixing containers can be switched on preferably by means of the operating device.

## Revendications

1. Véhicule comprenant des composants d'équipement pour le traitement de produits agricoles et de constituants de fourrage concentré, en particulier véhicule pour la préparation mobile de fourrage mélangé pour animaux, les composants d'équipement montés sur le véhicule comportant au moins un moulin (2) et/ou une presse (3), un premier récipient de mélange (13A) comprenant une vis sans fin de mélange (15), un deuxième récipient de mélange (13B) comprenant une vis sans fin de mélange (15), un dispositif de distribution pour faire sortir une charge pré-mélangée hors des récipients de mélange (13A, 13B) ainsi qu'un dispositif de transport pneumatique comprenant au moins une soufflante (7A ; 7B) ainsi qu'un filtre (18A ; 18B) pour le chargement des récipients de mélange (13A, 13B) et/ou pour le transport des produits entre les composants d'équipement, **caractérisé en ce qu'**au moins les deux récipients de mélange (13A, 13B) sont constitués de récipients sous pression séparés qui peuvent être chargés de manière sélective en commun ou de manière séparée au moyen du dispositif de transport pneumatique (6) et peuvent être vidés de manière sélective en commun ou de manière séparée par le biais du dispositif de distribution, un dispositif de répartition (30) étant intégré dans une conduite d'aspiration (21) pour les deux récipients de mélange (13A, 13B), à l'aide duquel dispositif de répartition le chargement sélectivement séparé ou en commun des récipients de mélange (13A, 13B) peut être commandé, la quantité de produit mélangé acheminé jusqu'au récipient de mélange respectif pouvant être commandée au moyen du dispositif de répartition (30) en cas de chargement en commun des deux récipients de mélange (13A, 13B).

2. Véhicule selon la revendication 1, **caractérisé en ce qu'**un dispositif de pesage (16A, 16B) séparé, de préférence électronique, est associé à chaque récipient de mélange (13A, 13B).

3. Véhicule selon la revendication 2, **caractérisé en ce que** la quantité de produit mélangé acheminé peut être régulée à l'aide du dispositif de répartition (30) en fonction des signaux de mesure des dispositifs de pesage (16A, 16B).

4. Véhicule selon l'une quelconque des revendications 1 à 3, **caractérisé en ce que** le dispositif de répartition (30) est pourvu d'un volet de répartition (31) pivotant à l'aide duquel le produit mélangé aspiré par le biais de la conduite d'aspiration commune (21) peut être réparti, avec des proportions de quantité ajustables, dans des conduites d'alimentation séparées (23A, 23B) pour les récipients de mélange (13A, 13B).

5. Véhicule selon la revendication 4, **caractérisé en ce que** le volet de répartition (31) peut être pivoté de manière continue.

6. Véhicule selon la revendication 4 ou 5, **caractérisé en ce que** le volet de répartition (31) est accouplé à un capteur d'inclinaison (45) pour contrôler l'angle de pivotement du volet de répartition (31).

7. Véhicule selon la revendication 4, 5 ou 6, **caractérisé en ce que** le volet de répartition (31) est relié de manière solidaire en rotation à un arbre de support (39) qui est monté sur un boîtier de répartition (32) qui est de préférence pourvu d'un raccord d'aspiration (34) au niveau d'un côté frontal (33) et de sorties séparées (36A, 36B) pour chaque récipient de mélange (13A, 13B) au niveau d'un côté opposé.

8. Véhicule selon la revendication 7, **caractérisé en ce que** l'arbre de support (39) est relié à un bras de réglage (40) à l'extérieur du boîtier de répartition (32), lequel bras de réglage peut être déplacé au moyen d'un dispositif de réglage, en particulier d'un cylindre de réglage hydraulique (42), pour le pivotement contrôlé du volet de répartition (31).

9. Véhicule selon l'une quelconque des revendications 1 à 8, **caractérisé en ce qu'**un organe d'étranglement, en particulier un robinet à boisseau sphérique (24A, 24B) pouvant être commandé au moyen d'un cylindre pneumatique, est intégré dans chaque conduite d'alimentation (23A, 23B) derrière le dispositif de répartition (30) par rapport aux récipients de mélange (13A, 13B).

10. Véhicule selon l'une quelconque des revendications 1 à 9, **caractérisé en ce que** l'équipement de transport pneumatique (6) sur le véhicule comprend deux soufflantes (7A, 7B), de préférence des soufflantes à piston rotatif, présentant un côté aspiration et un côté refoulement.

11. Véhicule selon la revendication 10, **caractérisé en ce que** le côté aspiration des deux soufflantes (7A, 7B) est, pour soumettre les récipients de mélange à une dépression, raccordé aux récipients de mélange (13A, 13B) par le biais d'une conduite de dépression (8A, 8B, 8), des soupapes d'aspiration séparées (17A, 17B) étant à chaque fois associées au côté aspiration des deux soufflantes pour déconnecter la soufflante associée de la conduite de dépression (8).

12. Véhicule selon la revendication 10 ou 11, **caractérisé en ce qu'**un premier dispositif de répartition d'air (27A) est associé au côté refoulement de la première soufflante (7A) et un deuxième dispositif de répartition d'air (27B) est associé au côté refoulement de la deuxième soufflante (7B), lesquels dispositifs de répartition d'air peuvent être, de manière sélective, connectés ou déconnectés par le biais d'un volet de connexion pouvant être commandé ou d'un tiroir (27C).

13. Véhicule selon la revendication 12, **caractérisé en ce que** le premier dispositif de répartition d'air (27A) est pourvu d'un raccord d'air supérieur et d'un raccord d'air inférieur en vue de la sollicitation en surpression et de la vidange par pression du premier récipient de mélange (13A) et le deuxième dispositif de répartition d'air (27B) est pourvu d'un raccord d'air supérieur et d'un raccord d'air inférieur en vue de la sollicitation en surpression et de la vidange par pression du deuxième récipient de mélange (13B).

14. Véhicule selon l'une quelconque des revendications 1 à 13, **caractérisé en ce qu'**un aiguillage (60) présentant un volet d'aiguillage réglable (66) est intégré dans une conduite d'alimentation en produit (4) de l'équipement de transport pneumatique, à l'aide duquel volet d'aiguillage le flux de produit peut être acheminé de manière sélective au moulin et/ou à la presse ou directement au dispositif de répartition (30).

15. Véhicule selon l'une quelconque des revendications 1 à 14, **caractérisé en ce que** les composants d'équipement peuvent être commandés au moyen d'un dispositif de commande central (50) et, de manière sélective, un chargement séparé ou en commun des récipients de mélange et/ou, de manière sélective, une vidange séparée ou en commun des récipients de mélange peuvent être sélectionnés, un chargement ou une vidange, dépendants du poids, des récipients de mélange pouvant être activés de préférence au niveau du dispositif de commande.
